# EUROPÄISCHE PATENTSCHRIFT

(11) **EP 0 735 296 B1**
(45) Veröffentlichungstag und Bekanntmachung des Hinweises auf die Patenterteilung: **10.06.1998**
(21) Anmeldenummer: 96100248.2
(22) Anmeldetag: 10.01.1996
(51) Int. Cl.: F16H 19/06, F16G 3/00

(54) **Linearantrieb**
Linear drive
Entraînement linéaire

(30) Priorität: 31.03.1995 DE 29505345 U
(43) Veröffentlichungstag der Anmeldung: 02.10.1996
(73) Patentinhaber: FESTO AG & Co, 73734 Esslingen (DE)
(72) Erfinder: Stoll, Kurt, Dr., D-73732 Esslingen (DE); Feyrer, Thomas, D-73734 Esslingen (DE)
(74) Vertreter: Abel, Martin, Dipl.-Ing.

(56) Entgegenhaltungen:
- EP-A- 0 395 915
- EP-A- 0 543 523
- DE-A- 3 016 696
- DE-A- 3 317 113
- DE-A- 4 016 867
- DE-U-29 505 345

## Beschreibung

Linearantrieb mit einem angetriebenen Zugmittel (6), beispielsweise ein Zahnriemen, und einem Abtriebsglied (16),
- das zwischen zwei Zugmittelenden (15, 15') des um Umlenkelemente (4,4') laufenden Zugmittels (6) angeordnet ist, und
- das im Betrieb eine durch das Zugmittel (6) veranlaßte Linearbewegung in Längsrichtung (12) eines Gehäuses (2) des Linearantriebes (1) ausführt,
- wobei die beiden Zugmittelenden (15, 15') jeweils über eine Verbindungseinrichtung (32) an dem Abtriebsglied (16) befestigt sind.

Die DE 40 16 867 A1 beschreibt einen Linearantrieb, der einen um zwei als Zahnräder ausgebildete Umlenkelemente umlaufenden Zahnriemen aufweist, dessen Enden über als Schraubverbindungen ausgestaltete Verbindungseinrichtungen an einem Abtriebsglied festgelegt sind, das sich mit einer zu transportierenden Last koppeln läßt. Die benötigte Vorspannung des als Zugmittel fungierenden Zahnriemens wird durch die Verbindungseinrichtungen eingestellt, die über mit dem Zahnriemen in Eingriff stehende verschiebbare Klötze verfügen, die sich mit Hilfe von Schrauben relativ zum Abtriebsglied einstellen lassen.

Das Einstellen der Zugmittelspannung ist bei dem bekannten Linearantrieb verhältnismäßig umständlich. Es muß hierzu mit einem Schraubwerkzeug zwischen den Trumen des Zahnriemens hantiert werden. Desweiteren läßt sich die bekannte Ausgestaltung eines Abtriebsgliedes bei sehr kleinen Linearantrieben kaum verwirklichen, da man sehr rasch an die Grenzen der Miniaturisierung gelangt.

Es ist daher die Aufgabe der vorliegenden Erfindung, ein Abtriebsglied der eingangs genannten Art zu schaffen, das auch bei kleinen Baugrößen eine einfache Vorgabe der gewünschten Zugmittelspannung ermöglicht.

Zur Lösung dieser Aufgabe ist vorgesehen:
- das Abtriebsglied (16) ist als Spannschloß für das Zugmittel (6) ausgebildet, wobei das Spannschloß in zwei Schloßelemente (28, 28') unterteilt ist, die jeweils einem Zugmittelende (15, 15') zugeordnet sind und die in einer einer gewünschten Zugmittelspannung entsprechenden Schließstellung fest aneinander fixierbar sind,
- jedes Schloßelement weist einen innerhalb einer längsseits offenen Längsvertiefung (23) des Gehäuses (2) laufenden Führungsabschnitt (33) und einen außerhalb der Längsvertiefung (23) angeordneten Verschlußabschnitt (36, 36') auf, wobei
   -- der jeweilige Führungsabschnitt über die jeweilige Verbindungseinrichtung (32) mit dem jeweiligen Zugmittelende verbunden ist, und
   -- sich die Schloßelemente wenigstens mit ihren Verschlußabschnitten seitlich in Längsrichtung (12) überlappen,
- die Schloßelemente sind zur stufenlosen Einstellung der Zugmittelspannung über Längsführungen (57, 57', 61, 61') längsverschieblich miteinander gekoppelt, und
- die Schloßelemente sind zum Fixieren der Schließstellung an den sich überlappenden Partien (53) der Verschlußabschnitte aneinander festlegbar.

Auf diese Weise liegt ein vor der Montage zweigeteiltes Abtriebsglied vor, wobei jedes dieser als Schloßelemente bezeichnete Teile vor dem Zusammenfügen an einem der Zugmittelenden festlegbar ist. Es ist dann lediglich noch das derart ausgestattete Zugmittel in den Linearantrieb einzulegen und das Spannschloß durch gegenseitiges Befestigen der Schloßelemente zu schließen. Dabei ist die variable Schließstellung von Vorteil, die die Vorgabe unterschiedlicher Zugmittelspannungen bzw.einen Toleranzausgleich ermöglicht. Die durch die Längsführungen miteinander kooperierenden Schloßelemente können soweit zusammengeschoben werden, bis der gewünschte Vorspannungswert erreicht ist, um anschließend die auf diese Weise eingestellte Schließstellung durch geeignete, zwischen den sich überlappenden Partien der Verschlußabschnitte wirkende Befestigungsmaßnahmen zu fixieren. Da sich der Fixierbereich außerhalb der Längsvertiefung befinden kann, ist er sehr gut zugänglich, so daß sich das Spannschloß einfach handhaben läßt. Die erfindungsgemäße Konstruktion des Abtriebsgliedes ermöglicht die Verwirklichung kleiner Baugrößen, was die Miniaturisierung von Linearantrieben erleichtert.

Vorteilhafte Weiterbildungen der Erfindung sind in den Unteransprüchen aufgeführt.

Bevorzugt sind die Längsführungen von einfach herstellbaren ineinandergreifenden Nut und Feder-Anordnungen gebildet.

Der Schließvorgang des Spannschlosses wird erleichtert, wenn die Schloßelemente zumindest während des Endbereiches des Verschiebeweges in allen Querrichtungen gegeneinander abgestützt sind. Es genügt in diesem Falle, die Schloßelemente mit geeigneter Druckkraft zu beaufschlagen, die Notwendigkeit einer seitlichen Abstützung besteht durch die integrierte Querabstützung nicht.

Zur gegenseitigen Befestigung der Schloßelemente ist beispielsweise eine Schraub- oder Stiftverbindung vorgesehen, die mindestens ein bolzenartiges Querglied aufweist, das gleichzeitig in beide sich überlappenden Partien der Verschlußabschnitte eingreift und diese insbesondere durchsetzt. Die zur Aufnahme des Quergliedes dienenden Ausnehmungen werden zweckmäßigerweise erst dann in die Verschlußabschnitte eingebracht, wenn die gewünschte Schließstellung erreicht ist.

Vorteilhafte weitere Möglichkeiten zur Festlegung der beiden Schloßelemente bestehen in der Verwirklichung von Klebe- und/oder Schweißverbindungen.

Der im Betrieb mit dem Gehäuse des Linearantriebes zusammenwirkende Führungsabschnitt des Abtriebsgliedes ist zweckmäßigerweise von an den beiden Schloßelementen vorgesehenen Führungskolben gebildet, die über schmälere Führungsstege mit den Verschlußabschnitten verbunden sind.

Bevorzugt sind die beiden Schloßelemente identisch gestaltet, wobei sie zweckmäßigerweise jeweils einstückige, aus Kunststoffmaterial bestehende Bauteile sind.

Nachfolgend wird die Erfindung anhand der beiliegenden Zeichnung näher erläutert. In dieser zeigen:
- Figur 1: eine erste Bauform des erfindungsgemäßen Abtriebsgliedes im Zusammenhang mit einem damit ausgestatteten Linearantrieb, teilweise aufgebrochen,
- Figur 2: einen Längsschnitt durch die in Figur 1 gezeigte Anordnung mit Blickrichtung gemäß Pfeil II aus Figur 1,
- Figur 3: eine Einzeldarstellung des Abtriebsgliedes gemäß Figuren 1 und 2 in Seitenansicht, wobei der Verschlußabschnitt des rechten Schloßelementes abgebrochen dargestellt ist, so daß teilweise der Blick auf die Überlappungspartie des linken Schloßelementes freigegeben ist,
- Figur 4: einen Querschnitt durch das Abtriebsglied der Figur 3 gemäß Schnittlinie IV-IV, und
- Figur 5: das Abtriebsglied in Einzeldarstellung bei noch getrennten Schloßelementen in der Offenstellung im Zustand vor dem Schließen des als Spannschloß fungierenden Abtriebsgliedes.

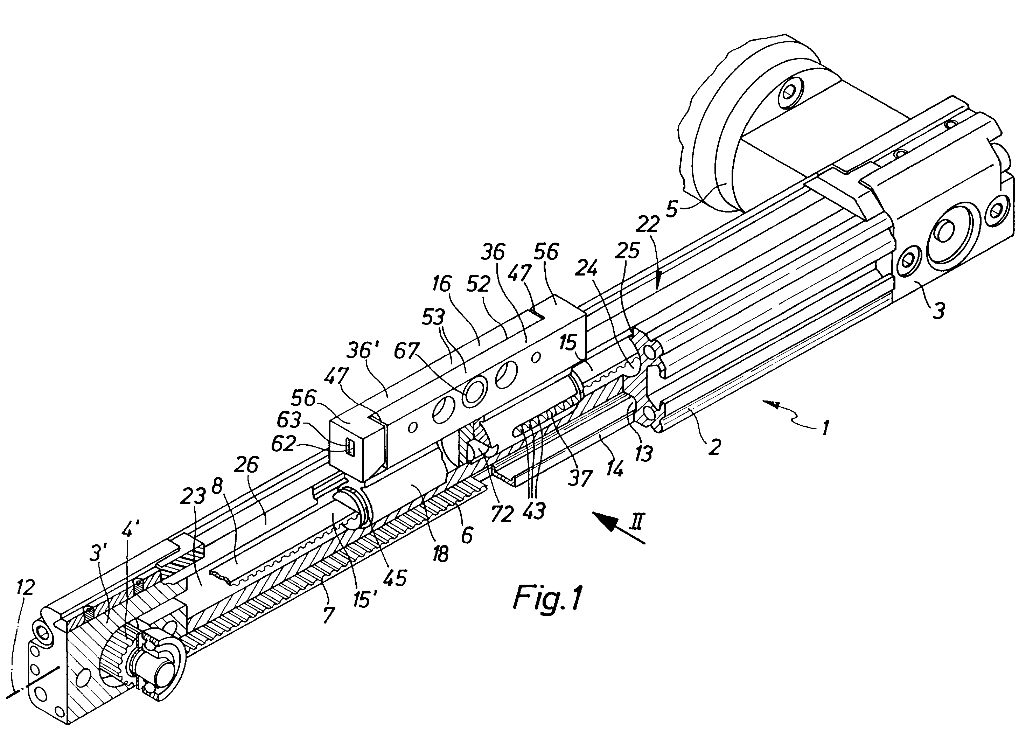

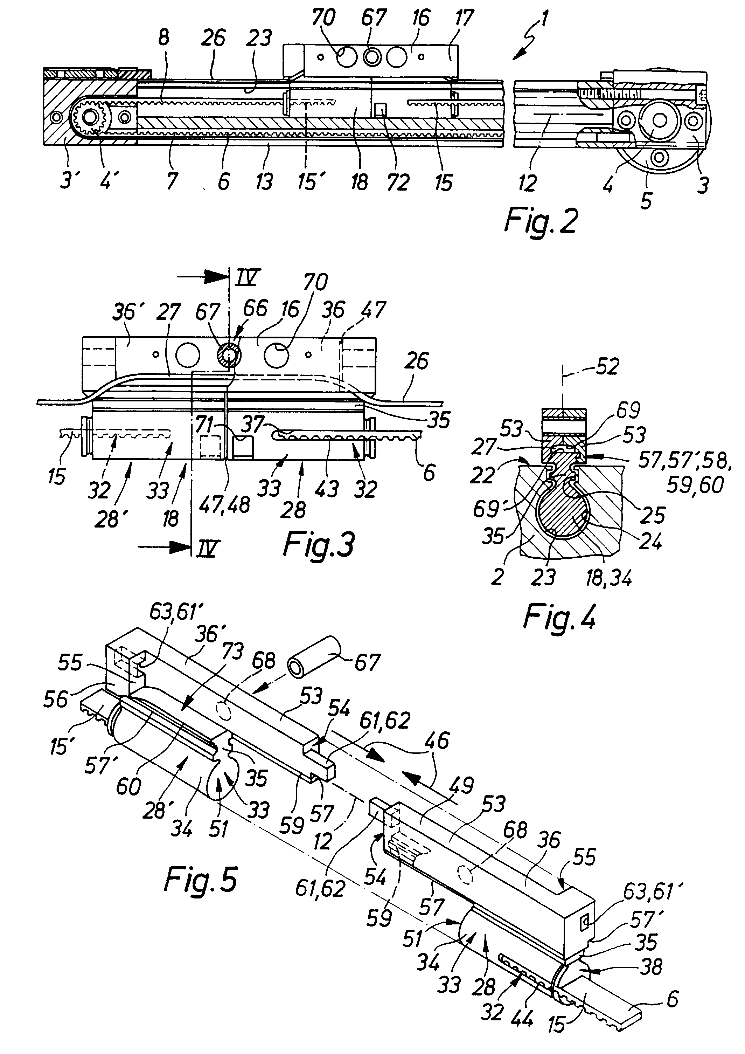

Aus Figuren 1 und 2 geht ein elektromotorisch betriebener Linearantrieb 1 hervor. Er besitzt ein profiliertes langgestrecktes Gehäuse 2, das an beiden Stirnseiten mit jeweils einem Abschlußdeckel 3, 3' versehen ist. In jedem Abschlußdeckel ist ein von einem drehbar gelagerten Zahnrad gebildetes Umlenkelement 4, 4' angeordnet. Das eine Umlenkelement 4' ist frei drehbar gelagert. Das andere Umlenkelement 4 steht mit einem Elektromotor 5 in Antriebsverbindung, der insbesondere seitlich an den zugeordneten Abschlußdeckel 3 angeflanscht ist.

Um die beiden Umlenkelemente 4, 4' ist ein strangförmiges Zugmittel 6 herumgeschlungen. Es ist in Querrichtung nachgiebig und beim Ausführungsbeispiel als Zahnriemen ausgeführt, der mit den beiden Umlenkelementen 4, 4' kämmt. Stattdessen könnte beispielsweise auch ein Gliederstrang, beispielsweise eine Kette, vorgesehen sein, oder ein sonstiges bandartiges Element.

Das Zugmittel 6 verfügt über zwei Trume 7, 8, die sich parallel zueinander erstrecken und beide in Längsrichtung 12 des Gehäuses 2 ausgerichtet sind. Der eine, in Figur 2 unten liegenden erste Trum 7 ist durchgehend und läuft in einer sich in Längsrichtung 12 erstreckenden nutartigen Vertiefung 13 des Gehäuses 2. Er ist dadurch im Gehäuse 2 versenkt angeordnet. Die längsseitige Öffnung der Vertiefung 13 kann durch eine leistenähnliche Abdeckung 14 verschlossen sein. Der Eintritt des ersten Trumes 7 in die beiden Abschlußdeckel 3, 3' zu den Umlenkelementen 4, 4' erfolgt über geeignete Durchbrechungen in den Abschlußdeckeln 3, 3'.

Der zweite Trum 8 des Zugmittels 6 ist unterbrochen. Die sich auf diese Weise ergebenden beiden Zugmittelenden 15, 15' sind jedoch an einem zwischengefügten Abtriebsglied 16 befestigt, so daß sich insgesamt eine geschlossene Umschlingung der Umlenkelemente 4, 4' ergibt.

Das Abtriebsglied 16 verfügt über einen seitlich neben dem Gehäuse 2 außerhalb diesem angeordneten Kopplungsabschnitt 17, der zur Kopplung mit einer zu bewegenden Last dient. Diese nicht näher dargestellte Last kann direkt oder unter Zwischenschaltung von geeigneten Verbindungselementen an dem Kopplungsabschnitt 17 festgelegt werden. Beispielsweise kann die zu bewegende Last an einem nicht näher dargestellten Führungsschlitten befestigt werden, der mit dem Kopplungsabschnitt 17 verbunden ist und sich an einer externen Längsführung abstützt.

Im Betrieb des Linearantriebes 1 wird das Zugmittel 6 mit Hilfe des Elektromotors 5 zu einer Umlaufbewegung angetrieben, aus der eine Linearbewegung des Abtriebsgliedes 16 in zwei möglichen Bewegungsrichtungen in Richtung der Längsachse 12 resultiert. Entsprechend bewegt sich die an das Abtriebsglied 16 angekoppelte Last.

Bei einem nicht näher dargestellten Ausführungsbeispiel wird die Antriebskraft von einem durch Fluidbeaufschlagung zu einer Bewegung angetriebenen Kolben geliefert, der in den ersten Trum 7 zwischengeschaltet sein kann.

Damit das Abtriebsglied 16 eine gewisse Seitenführung erfährt, läuft es mit einer Führungspartie 18 in einer längsseits zur Gehäuse-Außenfläche 22 offenen Längsvertiefung 23 des Gehäuses 2. Der zweite Trum 8 des Zugmittels 6 verläuft im Innern dieser Längsvertiefung 23 parallel zu dieser. Die Zugmittelenden 15 sind an der Führungspartie 18 festgelegt.

Die beispielsgemäße Längsvertiefung 23 hat einen bezüglich der Gehäuse-Außenfläche 22 tiefer liegenden, im Querschnitt erweiterten Abschnitt 24, der vorzugsweise kreisförmig konturiert ist. Er ist beispielsgemäß zylindrisch gestaltet. Die Verbindung zur Gehäuse-Außenfläche 22 stellt ein ebenfalls in Längsrichtung 12 verlaufender schlitzartiger engerer Abschnitt 25 her. Dieser ist von außen her von einem Abdeckband 26 abgedeckt, das ein Eindringen von Verunreinigungen verhindert und endseitig an den beiden Abschlußdeckeln 3, 3' festgelegt ist. Das Abtriebsglied 16 enthält eine axial durchgehende Durchbrechung 27, die von dem Abdeckband 26 durchsetzt wird und einen aus Figur 3 ersichtlichen Kurvenverlauf besitzt, der bewirkt, daß das Abdeckband 26 bei der Linearbewegung des Abtriebsgliedes 16 in dessen Bereich von dem schlitzartigen Abschnitt 25 lokal abgehoben wird.

Das Abtriebsglied 16 dient nicht nur der Kraftabgabe nach außen, sondern bildet gleichzeitig auch ein Spannschloß für das Zugmittel 6. Das Abtriebsglied 16 wird bei der Montage des Zugmittels 6 zum Schließen des Zugmittels im Bereich der Zugmittelenden 15, 15' verwendet.

Wie vor allem auch aus Figur 5 hervorgeht, setzt sich das Abtriebsglied bzw. Spannschloß 16 aus zwei Schloßelementen 28, 28' zusammen, bei denen es sich um in der gezeigten Offenstellung getrennte Bauteile handelt. Beide Schloßelemente 28, 28' sind in vorteilhafter Ausgestaltung einstückig ausgebildet, insbesondere als aus Kunststoffmaterial bestehende Spritzgußteile. Beide Schloßelemente 28, 28' sind überdies kostensenkend identisch ausgebildet.

An den beiden Schloßelementen 28, 28' ist jeweils eines der Zugmittelenden 15, 15' insbesondere lösbar befestigt. Bei den hierzu verwendeten Verbindungseinrichtungen 32 wird bevorzugt auf Schraubverbindungen verzichtet, die einer Miniaturisierung entgegenstehen können.

Jedes Schloßelement 28, 28' verfügt über einen Führungsabschnitt 33, mit dem es innerhalb der Längsvertiefung 23 längsbeweglich aufgenommen ist. Dieser setzt sich beispielsgemäß aus einem in dem erweiterten Abschnitt 24 laufenden Führungskolben 34 und einem sich radial nach außen an diesen anschließenden schmäleren Führungssteg 35 zusammen. Der Führungssteg 35 durchsetzt den schlitzartigen Abschnitt 25. An ihn schließt sich ein außerhalb der Längsvertiefung 23 liegender Verschlußabschnitt 36, 36' an.

Die Zugmittelenden 15, 15' sind jeweils über eine Verbindungseinrichtung 32 mit dem einen Führungskolben 34 fest verbunden. Die beispielsgemäße Verbindungseinrichtung 32 verfügt über eine in der Ebene des Zugmittels 6 verlaufende schlitzartige Aussparung 37, die an einer Längsseite (bei 44) und zur rückwärtigen Stirnfläche 38 des Führungskolbens 34 offen ist. Zum Beispiel die dem Verschlußabschnitt 36, 36' zugewandte untere Innenfläche der Aussparung 37 trägt eine lineare Verzahnung 43, die zur Verzahnung des Zugmittels 6 komplementär ist. Die Höhe der Aussparung 37 entspricht etwa der Dicke des Zugmittels 6, das über die auf der Mantelfläche des Führungskolbens 34 liegende längsseitige Öffnung 44 seitwärts in die Aussparung 37 eingedrückt ist. Das Zugmittel 6 kommt mit seiner gesamten Breite innerhalb des Führungskolbens 34 zu liegen und ragt an der rückwärtigen Stirnfläche 38 mit seinem zum ersten Trum 7 führenden Abschnitt heraus. Auf diese Weise ist das betreffende Zugmittelende 15, 15' form- und kraftschlüssig am betreffenden Schloßelement 28, 28' fixiert. Zur Sicherung der Verbindung kann noch ein Sicherungsring 45 auf einen stirnseitigen Bund des Führungskolbens 34 aufgesetzt werden, der die von der Aussparung 37 getrennten Kolbenabschnitte zusammenhält und auch das Zugmittel 6 umschließt. Somit liegt eine sehr einfache, schraubenlos arbeitende Verbindungseinrichtung 32 vor, die sich auch bei extrem kleinbauenden Abtriebsgliedern 16 einsetzen läßt.

Um dem um die Umlenkelemente 4, 4' herumgeschlungenen Zugmittel 6 die für den Betrieb gewünschte Spannung aufzuerlegen, ist eine Manipulation an den Verbindungseinrichtungen 32 weder notwendig noch möglich. Die gewünschte Zugmittelspannung wird durch mehr oder weniger weites axiales Zusammenfügen der beiden Schloßelemente 28, 28' eingestellt, in die das Abtriebsglied 16 unterteilt ist. Bei der Montage des Zugmittels 16 am Linearantrieb 1 werden die an den Zugmittelenden 15, 15' angebrachten Schloßelement 28, 28' ausgehend von der Offenstellung in eine aus Figuren 1 bis 4 hervorgehende Schließstellung gebracht, in der sie fest aneinander fixiert werden. Dabei ergänzen sie sich zu dem Abtriebsglied 16.

Beim Schließen des Spannschlosses 16 werden die Schloßelemente 28, 28' mit ihrer Vorderseite voraus gemäß Pfeilen 46 linear zusammengeschoben. Je weiter die Schloßelemente 28, 28' zusammengeschoben werden, desto höher ist die Spannung des angebrachten Zugmittels 6. Zweckmäßigerweise schiebt man die Schloßelemente 28, 28' unter Verwendung einer geeigneten Meßeinrichtung soweit zusammen, bis die gewünschte Spannung vorliegt. In dieser als Schließstellung bezeichneten Verschiebestellung können zwischen den einander axial zugewandten Flächen der Schloßelemente 28, 28' mehr oder weniger große axiale Zwischenräume 47 vorliegen.

Die beispielsgemäße Anordnung ist so getroffen, daß sich die Führungsabschnitte 33 in der Schließstellung nicht überlappen. Die beiden Führungskolben 34 und die beiden Führungsstege 35 schließen sich fluchtend axial aneinander an, wobei sie die bereits erwähnte Führungspartie 18 bilden, die lediglich durch eine Trennstelle 48 axial unterteilt ist, die einen Zwischenraum 47 aufweisen kann.

Die Verschlußabschnitte 36, 36' sind so ausgebildet, daß sie sich in der Schließstellung seitlich in mit der Verschieberichtung 46 zusammenfallender Längsrichtung 12 überlappen. Die Verschlußabschnitte 36, 36' sind insgesamt länglich ausgebildet, wobei sie sich ausgehend von der Rückseite eines jeweiligen Schloßelementes 28, 28', d.h. von der Nachbarschaft der rückwärtigen Stirnfläche 38, linear nach vorne erstrecken, wobei sie mit einer vorderen Partie 49 axial über die Vorderseite des zugeordneten Führungskolbens 34 hinausragen. Beispielsgemäß ist ein jeweiliger Verschlußabschnitt 36, 36' etwa doppelt so lang wie ein jeweiliger Führungsabschnitt 33.

Die beiden Verschlußabschnitte 36, 36' ergänzen sich in der Schließstellung zu dem Kopplungsabschnitt 17. Dabei überlappen sie sich mit leistenartig geformten Überlappungspartien 53, die seitlich aneinanderliegen. Die in Längsrichtung 12 verlaufende Trennebene 52 zwischen den Überlappungspartien 53 verläuft parallel zur Umlaufebene des Zugmittels 6 und vorzugsweise mittig. Die vordere Stirnfläche 54 einer jeweiligen Überlappungspartie 52 liegt dabei einer Begrenzungsfläche 55 gegenüber, die an einer vom rückwärtigen Endbereich des jeweils anderen Verschlußabschnittes 36, 36' gebildeten, vorzugsweise als Anschlagpartie wirkenden Partie 56 vorgesehen ist. Zwischen den sich quer zur Längsrichtung 12 erstreckenden Flächen 54, 55 können sich die erwähnten Zwischenräume 47 befinden, wobei allerdings gesagt werden muß, daß die beiden Schloßelemente 28, 28' bei entsprechender Schließstellung im Bereich der Zwischenräume 47 auch in direktem Kontakt miteinander stehen können.

In Draufsicht von radial außen her auf das Abtriebsglied 16 gesehen, verfügt jeder beispielsgemäße Verschlußabschnitt 36, 36' über eine L-ähnliche Gestalt, wobei der längere L-Schenkel die in Längsrichtung 12 ausgerichtete Überlappungspartie 53 und der kürzere L-Schenkel die in Querrichtung verlaufende Anschlagpartie 56 bildet.

Damit die Einstellung der Zugmittelspannung leicht vonstatten geht, sind die Schloßelemente 28, 28' über zusammenwirkende Längsführungen 57, 57' längsverschieblich miteinander gekoppelt. Das Ausführungsbeispiel besitzt zwei Paare von formschlüssig zusammenwirkenden Längsführungen 57, 57', die bevorzugt als Nut und Feder-Anordnungen 58 ausgebildet sind. Jede Überlappungspartie 53 hat am unteren Rand der vorderen Partie 49 eine längsseits nach innen offene Führungsnut 59, in die eine am anderen Schloßelement im Übergangsbereich zwischen dem Führungsabschnitt 33 und dem Verschlußabschnitt 36, 36' angeordnete Führungsrippe 60 eingreift.

Während der ersten Wegstrecke des Führungskontaktes lassen sich die Schloßelemente 28, 28' noch problemlos seitwärts voneinander abheben. Sobald sie jedoch ein gewisses Maß zusammengesteckt sind, werden weitere kooperierende Längsführungen 61, 61' wirksam, die eine allseitige Querabstützung hervorrufen, so daß nurmehr ein axialer Verschiebe-Freiheitsgrad vorliegt.

Die zur Querabstützung dienenden Längsführungen 61, 61' setzen sich beim Ausführungsbeispiel aus paarweise zusammenwirkenden riegelartigen Zungen 62 und Ausnehmungen 63 zusammen. An der vorderen Stirnseite 54 einer jeweiligen Überlappungspartie 53 ist eine axial vorragende, auch als Riegel bezeichenbare Zunge 62 angeordnet, der eine an der Partie 56 des jeweils anderen Schloßelementes 28, 28' vorgesehene Ausnehmung 63 in Verschieberichtung 46 axial gegenüberliegt. Beim Zusammenschieben der Schloßelemente 28, 28' greift somit auf der letzten Wegstrecke jeweils eine Zunge 62 des einen Schloßelementes 28, 28' axial in eine komplementäre Ausnehmung 63 des anderen Schloßelementes 28', 28 ein. Mit Ausnahme der Axialrichtung sind die Schloßelemente dadurch unbeweglich verriegelt.

Die im Verschiebeweg einer jeweiligen Überlappungspartie 53 liegende Anschlagpartie 56 kann auch dazu beitragen, Überdehnungen beim Spannvorgang zu verhindern. Diese Schutzfunktion kann allerdings auch von den einander zugewandten vorderen Stirnflächen 54 der Führungsabschnitte 33 übernommen werden, in welchem Falle die Anschlagpartie 56 lediglich den Zweck haben kann, eine Verriegelungsausnehmung 63 für die Zungen 62 und die dadurch erzeugte Querverriegelung der beiden Schloßelemente 28, 28' bereitzustellen.

Es wäre denkbar, ausschließlich Längsführungen vorzusehen, die gleichzeitig eine Querabstützung bewirken. So könnten die Schloßelemente 28, 28' beispielsweise mittels längsverlaufender Schwalbenschwanzführungen miteinander gekoppelt sein. Beim Ausführungsbeispiel wäre es im übrigen auch denkbar, auf die Nut und Feder-Anordnungen 58 zu verzichten und lediglich die weiteren Längsführungen 61, 61' zur Verschiebeführung der Schloßelemente 28, 28' vorzusehen.

Um die Schloßelemente 28, 28' in der eingestellten Schließstellung zu fixieren, werden zwischen den Überlappungspartien 53 Befestigungsmaßnahmen getroffen. Beim Ausführungsbeispiel besteht die Befestigungsmaßnahme in der Herstellung einer Stiftverbindung 66, bei der wenigstens ein stiftartiges Querglied 67 gleichzeitig in beide Überlappungspartien 53 formschlüssig eingreift. Realisiert wird dies vorzugsweise dadurch, daß man die beiden Überlappungspartien 53 nach Erreichen der Schließstellung festhält und gemeinsam quer durchbohrt, so daß sich zwei fluchtende, in Figur 5 noch gestrichelt angedeutete Durchbrechungen 68 ergeben, in die das Querglied 67 anschließend eingesetzt bzw. eingepreßt wird.

Anstelle einer Stiftverbindung 66 wäre zum Beispiel auch eine Schraub- oder Nietverbindung denkbar, wobei eine lösbare Verbindung den Vorteil hat, daß sich das Zugmittel 6 im Defektfalle leicht austauschen läßt.

Bei einer nicht näher dargestellten Ausgestaltung ist als Befestigungsmaßnahme zwischen den beiden Schloßelementen 28, 28' eine Klebeverbindung oder eine Schweißverbindung, vorzugsweise eine Ultraschallschweißverbindung, vorgesehen. Die Verbindungsflächen sind hierbei zweckmäßigerweise die einander in der Trennebene 52 zugewandten Seitenflächen der Überlappungspartien 53.

Bevorzugt sind die Trennstellen zwischen den beiden Schloßelementen 28, 28' so gelegt, daß sich für die von dem Abdeckband 26 durchlaufene Durchbrechung 27 über ihre gesamte Länge eine Längsteilung ergibt, die dazu führt, daß die Durchbrechung 27 in der Offenstellung des Spannschlosses längsseits offen ist. Beide Schloßelemente 28, 28' verfügen über Begrenzungsflächen 69, 69', die sich bei zusammengesetzten Schloßelementen 28, 28' zur Innenfläche der Durchbrechung 27 ergänzen. Beispielsgemäß verläuft die Durchbrechung 27 im Bereich der beiden Verschlußabschnitte 36, 36', deren Überlappungspartien 53 die Seitenflächen der Durchbrechung 27 bilden. Die Grundfläche 73 der Durchbrechung ist vorzugsweise am Führungsabschnitt 33 vorgegeben.

Beim Ausführungsbeispiel verfügt der Kopplungsabschnitt 17 über mehrere Querbohrungen 70, die das Befestigen einer zu transportierenden Last erlauben. Aus dem gleichen Grund ist das stiftförmige Querglied 67 hülsenförmig ausgebildet.

Wenigstens einer der Führungskolben 34 kann eine Ausnehmung 71 aufweisen, in der ein Magnetteil 72 gelagert ist, das zu einer Positionserfassungeinrichtung des Linearantriebes 1 gehört.

Da die beiden Verschlußabschnitte 36, 36' außerhalb der Längsvertiefung 23 zu liegen kommen, lassen sie sich sehr leicht durch geeignete Werkzeuge erfassen, spannen und aneinander befestigen. Ein Eingriff in den unmittelbaren Bereich des Zugmittels erübrigt sich dabei.

## Patentansprüche

1. Linearantrieb mit einem angetriebenen Zugmittel (6), beispielsweise ein Zahnriemen, und einem Abtriebsglied (16),
- das zwischen zwei Zugmittelenden (15,15') des um Umlenkelemente (4,4') laufenden Zugmittels (6) angeordnet ist, und
- das im Betrieb eine durch das Zugmittel (6) veranlaßte Linearbewegung in Längsrichtung (12) eines Gehäuses (2) des Linearantriebes (1) ausführt,
- wobei die beiden Zugmittelenden (15,15') jeweils über eine Verbindungseinrichtung (32) an dem Abtriebsglied (16) befestigt sind, gekennzeichnet durch folgende Merkmale:
- das Abtriebsglied (16) ist als Spannschloß für das Zugmittel (6) ausgebildet, wobei das Spannschloß in zwei Schloßelemente (28, 28') unterteilt ist, die jeweils einem Zugmittelende (15, 15') zugeordnet sind und die in einer einer gewünschten Zugmittelspannung entsprechenden Schließstellung fest aneinander fixierbar sind,
- jedes Schloßelement weist einen innerhalb einer längsseits offenen Längsvertiefung (23) des Gehäuses (2) laufenden Führungsabschnitt (33) und einen außerhalb der Längsvertiefung (23) angeordneten Verschlußabschnitt (36, 36') auf, wobei
-- der jeweilige Führungsabschnitt über die jeweilige Verbindungseinrichtung (32) mit dem jeweiligen Zugmittelende verbunden ist, und
-- sich die Schloßelemente wenigstens mit ihren Verschlußabschnitten seitlich in Längsrichtung (12) überlappen,
- die Schloßelemente sind zur stufenlosen Einstellung der Zugmittelspannung über Längsführungen (57, 57', 61, 61') längsverschieblich miteinander gekoppelt, und
- die Schloßelemente sind zum Fixieren der Schließstellung an den sich überlappenden Partien (53) der Verschlußabschnitte aneinander festlegbar.

2. Linearantrieb nach Anspruch 1, dadurch gekennzeichnet, daß die Längsführungen (57, 57') zumindest teilweise von ineinandergreifenden Nut und Feder-Anordnungen (58) gebildet sind.

3. Linearantrieb nach Anspruch 1 oder 2, dadurch gekennzeichnet, daß die Schloßelemente (28, 28'), insbesondere über die miteinander kooperierenden Längsführungen (61, 61'), zumindest während des Endbereiches des Verschiebeweges in allen Querrichtungen gegeneinander abgestützt sind.

4. Linearantrieb nach Anspruch 3, dadurch gekennzeichnet, daß zur Querabstützung an wenigstens einem Schloßelement (28, 28') eine Zunge (62) vorgesehen ist, die in eine am anderen Schloßelement (28', 28) im Verschiebeweg der Zunge (62) angeordnete Ausnehmung (63) eingreifen kann.

5. Linearantrieb nach Anspruch 4, dadurch gekennzeichnet, daß beide Schloßelemente (28, 28') mit einer Zunge (62) und, axial beabstandet zu dieser, mit einer Ausnehmung (63) versehen sind, wobei zum Zwecke des Spannens des Zugmittels (6) die Zungen (62) und Ausnehmungen (63) beim Zusammenschieben der Schloßelemente paarweise ineinandergreifen.

6. Linearantrieb nach Anspruch 5, dadurch gekennzeichnet, daß die Zunge (62) an der vorderen Stirnseite (54) des jeweils einen Verschlußabschnittes (36, 36') und die zugeordnete Ausnehmung (63) an einer dieser Stirnseite (54) in Verschieberichtung (46) gegenüberliegenden Partie (56) des anderen Verschlußabschnittes angeordnet ist.

7. Linearantrieb nach einem der Ansprüche 1 bis 6, dadurch gekennzeichnet, daß die überlappenden Partien (53) der Verschlußabschnitte (36, 36') leistenförmig ausgebildet sind.

8. Linearantrieb nach einem der Ansprüche 1 bis 7, dadurch gekennzeichnet, daß zur gegenseitigen Festlegung der Schloßelemente (28, 28') in der Schließstellung eine zwischen den Verschlußabschnitten (36, 36') wirkende Schraub- oder Stiftverbindung (66) mit wenigstens einem in beide sich überlappenden Partien (53) eingreifenden Querglied (67) vorgesehen ist.

9. Linearantrieb nach einem der Ansprüche 1 bis 8, dadurch gekennzeichnet, daß zur gegenseitigen Festlegung der Schloßelemente (28, 28') in der Schließstellung eine zwischen den Verschlußabschnitten (36, 36') wirkende Klebe- oder Schweißverbindung, z.B. eine Ultraschallschweißverbindung, vorgesehen ist.

10. Linearantrieb nach einem der Ansprüche 1 bis 9, dadurch gekennzeichnet, daß die beiden zusammengefügten Verschlußabschnitte (36, 36') gemeinsam den mit einer zu transportierenden Last koppelbaren Kopplungsabschnitt (17) des Abtriebsgliedes (16) bilden.

11. Linearantrieb nach einem der Ansprüche 1 bis 10, dadurch gekennzeichnet, daß jeder Führungsabschnitt (33) über einen in einem komplementären erweiterten Abschnitt (24) der Längsvertiefung (23) laufenden Führungskolben (34) verfügt, an dem das zugeordnete Zugmittelende (15, 15') über die Verbindungseinrichtung (32) festgelegt ist.

12. Linearantrieb nach Anspruch 11, dadurch gekennzeichnet, daß jeder Führungsabschnitt (33) über einen Führungssteg (35) verfügt, der einen sich radial an den erweiterten Abschnitt (24) der Längsvertiefung (23) anschließenden schlitzartigen engeren Abschnitt (25) der Längsvertiefung (23) durchsetzt und den Führungskolben (34) mit dem zugeordneten Verschlußabschnitt (36, 36') verbindet.

13. Linearantrieb nach Anspruch 11 oder 12, dadurch gekennzeichnet, daß die Führungskolben (34) der beiden Schloßelemente (28, 28') ohne gegenseitige Überlappung fluchtend axial aufeinanderfolgend angeordnet sind.

14. Linearantrieb nach einem der Ansprüche 11 bis 13, dadurch gekennzeichnet, daß der Verschlußabschnitt (36, 36') eines jeweiligen Schloßelementes (28, 28') über die Vorderseite des zugeordneten Führungskolbens (34) hinausragt.

15. Linearantrieb nach einem der Ansprüche 1 bis 14, dadurch gekennzeichnet, daß das Abtriebsglied in Längsrichtung (12) von einer Durchbrechung (27) durchsetzt ist, die ihrerseits von einem die Längsvertiefung (23) abdeckenden Abdeckband (26) durchsetzbar ist und die durch den Trennbereich (52) der beiden Schloßelemente (28, 28') über ihre gesamte Länge derart längsgeteilt ist, daß die Durchbrechung im getrennten Zustand der Schloßelemente (28, 28') längsseits zugänglich ist.

16. Linearantrieb nach einem der Ansprüche 1 bis 15, dadurch gekennzeichnet, daß die Verbindungseinrichtungen (32) von die Zugmittelenden (15, 15') aufnehmenden innenverzahnten Aussparungen (37) gebildet sind.

17. Linearantrieb nach einem der Ansprüche 1 bis 16, dadurch gekennzeichnet, daß die beiden Schloßelemente (28, 28') identisch ausgebildet sind.

18. Linearantrieb nach einem der Ansprüche 1 bis 17, dadurch gekennzeichnet, daß der Linearantrieb (1) elektromotorisch betrieben ist, bei dem wenigstens eines der Umlenkelemente (4) als motorisch drehangetriebenes Rad ausgebildet ist.

19. Linearantrieb nach einem der Ansprüche 1 bis 18, dadurch gekennzeichnet, daß die beiden Schloßelemente (28, 28') jeweils als einstückige Bauteile, insbesondere aus Kunststoffmaterial bestehend, ausgeführt sind.

## Claims

1. Linear drive with a driven traction mechanism (6), for example a toothed belt, and an output member (16),
- which is mounted between two traction mechanism ends (15, 15') of the traction mechanism (6) running around reversing elements (4, 4'), and
- which in operation executes a linear movement, induced by the traction mechanism (6), in the longitudinal direction (12) of a housing (2) of the linear drive (1),
- wherein each of the two traction mechanism ends (15, 15') is attached to the output member (16) through a connection device (32), characterised by the following features:
- the output member (16) is in the form of a turnbuckle for the traction mechanism (6), wherein the turnbuckle is divided into two lock elements (28, 28'), each assigned to a traction mechanism end (15, 15'), and firmly fixable together in a closed position corresponding to a desired traction mechanism tension,
- each lock element has a guide section (33) running inside a longitudinal recess (23) of the housing (2) which is open along its length, and a sealing section (36, 36') located outside the longitudinal recess (23), wherein
-- the respective guide section is connected to the respective traction mechanism end via the respective connection device (32), and
-- the lock elements overlap at the side, at least with their sealing sections, in the longitudinal direction (12),
- the lock elements are coupled together with longitudinal movement facility, via longitudinal guides (57, 57', 61, 61'), for stepless adjustment of the traction mechanism tension, and
- the lock elements may be fixed together at the overlapping areas (53) of the sealing sections, for fixing of the closed position.

2. Linear drive according to claim 1, characterized in that the longitudinal guides (57, 57') are formed at least partially by tongue-and-groove assemblies (58) which engage with one another.

3. Linear drive according to claim 1 or 2, characterized in that the lock elements (28, 28') are supported relative to one another in all transverse directions, at least over the end section of the movement path, by the longitudinal guides (61, 61') working cooperatively together.

4. Linear drive according to claim 3, characterized in that a tongue (62) is provided on at least one lock element (28, 28') for lateral support, and is able to engage in a recess (63) located in the movement path of the tongue (62).

5. Linear drive according to claim 4, characterized in that both lock elements (28, 28') are provided with a tongue (62) and, axially separated from the latter, with a recess (63), wherein for the purpose of tensioning the traction mechanism (6), the tongues (62) and recesses (63) engage in pairs when the lock elements are pushed together.

6. Linear drive according to claim 5, characterized in that the tongue (62) is located on the front end face (54) of the one sealing section (36, 36'), and the associated recess (63) on a section (56) of the other sealing section lying opposite this end face (54) in the direction of movement (46).

7. Linear drive according to any of claims 1 to 6, characterized in that the overlapping areas (53) of the sealing sections (36, 36') are of strip-like design.

8. Linear drive according to any of claims 1 to 7, characterized in that, for reciprocal fixing of the lock elements (28, 28') in the closed position, a screw or pin connection (66) acting between the sealing sections (36, 36') and with one or more transverse members (67) engaging in both overlapping areas (53) is provided.

9. Linear drive according to any of claims 1 to 8, characterized in that, for reciprocal fixing of the lock elements (28, 28') in the closed position, an adhesive or welded connection acting between the sealing sections (36, 36'), e.g. an ultrasonic weld connection, is provided.

10. Linear drive according to any of claims 1 to 9, characterized in that the two joined-together sealing sections (36, 36') jointly form the coupling section (17) of the output member (16) which may be coupled to a load to be transported.

11. Linear drive according to any of claims 1 to 10, characterized in that each guide section (33) has a guide piston (34) running in a complementary enlarged section (24) of the longitudinal recess (23) and to which the assigned traction mechanism end (15, 15') is fixed via the connection device (32).

12. Linear drive according to claim 11, characterized in that each guide section (33) has a guide web (35) which passes through a slot-like narrower section (25) of the longitudinal recess (23) radially adjoining the enlarged section (24) of the longitudinal recess (23), and which connects the guide piston (34) to the assigned sealing section (36, 36').

13. Linear drive according to claim 11 or 12, characterized in that the guide pistons (34) of the two lock elements (28, 28') are arranged consecutively and axially aligned, without overlapping one another.

14. Linear drive according to any of claims 11 to 13, characterized in that the sealing section (36, 36') of each lock element (28, 28') extends beyond the front of the assigned guide piston (34).

15. Linear drive according to any of claims 1 to 14, characterized in that the output member is penetrated in the longitudinal direction (12) by an opening (27), which in turn may be penetrated by a cover strip (26) covering the longitudinal recess (23), and which is longitudinally divided over its entire length by the separating zone (52) between the two lock elements (28, 28') in such a way that, when the lock elements (28, 28') are separated, the opening is accessible along its length.

16. Linear drive according to any of claims 1 to 15, characterized in that the connection devices (32) are formed by internally-toothed recesses (37) holding the traction mechanism ends (15, 15').

17. Linear drive according to any of claims 1 to 16, characterized in that the two lock elements (28, 28') are of identical design.

18. Linear drive according to any of claims 1 to 17, characterized in that the linear drive (1) is electrically operated, with one or more of the reversing elements (4) being in the form of a rotary-driven motorized wheel.

19. Linear drive according to any of claims 1 to 18, characterized in that each of the two lock elements (28, 28') is designed as a one-piece component, in particular made of plastic.

## Revendications

1. Dispositif d'entraînement linéaire comportant un moyen de traction (6) entraîné, par exemple une courroie crantée, ainsi qu'un organe de sortie (16),
- qui est placé entre deux extrémités de moyen de traction (15, 15') du moyen de traction (6), passant sur des éléments de renvoi (4, 4') et
- qui exécute, pendant le fonctionnement, un déplacement linéaire causé par le moyen de traction (6), dans la direction longitudinale (12) d'un boîtier (2) du dispositif d'entraînement linéaire (1),
- les deux extrémités (15, 15') du moyen de traction étant fixées chacune par un dispositif de liaison (32) sur l'organe de sortie (16), caractérisé par les caractéristiques suivantes :
- l'organe de sortie (16) est réalisé en tant que tendeur pour le moyen de traction (6), le tendeur étant partagé en deux éléments de tendeur (28, 28'), qui sont associés chacun à une extrémité (15, 15') du moyen de traction et qui peuvent être fixés fermement l'un contre l'autre dans une position de fermeture correspondant à une tension voulue du moyen de traction,
- chaque élément de tendeur comporte une section de guidage (33) s'étendant à l'intérieur d'un évidement longitudinal (23) ouvert sur le côté longitudinal du boîtier (2) et une section de fermeture (36, 36'), disposée à l'extérieur de l'évidement longitudinal (23),
-- la section de guidage respective étant reliée à l'extrémité respective du moyen de traction, par le dispositif de liaison (32) respectif et
-- les éléments de tendeur se chevauchant latéralement, dans la direction longitudinale (12), au moins par leurs sections de fermeture,
- les éléments de tendeur sont accouplés entre eux, de manière à pouvoir coulisser longitudinalement, par l'intermédiaire de guidages longitudinaux (57, 57', 61, 61'), un vue du réglage continu de la tension du moyen de traction et
- les éléments de tendeur peuvent être fixés l'un sur l'autre, en vue de la fixation de la position de fermeture, sur les parties (53) se chevauchant des sections de fermeture.

2. Dispositif d'entraînement linéaire selon la revendication 1, caractérisé en ce que les guidages longitudinaux (57, 57') sont formés au moins en partie par des dispositifs à rainure et languette (58), s'engageant l'un dans l'autre.

3. Dispositif d'entraînement linéaire selon la revendication 1 ou 2, caractérisé en ce que les éléments de tendeur (28, 28') sont soutenus l'un par rapport à l'autre dans toutes les directions transversales, en particulier par l'intermédiaire des guidages longitudinaux (61, 61') coopérant entre eux, au moins pendant le tronçon terminal de la course de déplacement.

4. Dispositif d'entraînement linéaire selon la revendication 3, caractérisé en ce que pour l'appui transversal contre au moins un élément de tendeur (28, 28'), il est prévu une languette (62), qui peut s'engager dans un évidement (63), disposé sur l'autre élément de tendeur (28, 28'), dans le parcours de déplacement de la languette (62).

5. Dispositif d'entraînement linéaire selon la revendication 4, caractérisé en ce que les deux éléments de tendeur (28, 28') sont pourvus d'une languette (62) et, à distance axiale de celle-ci, d'un évidement (63), les languettes (62) et les évidements (63) s'engageant deux par deux les uns dans les autres, lorsque sont réunis les éléments de tendeur, dans le but de tendre le moyen de traction (6).

6. Dispositif d'entraînement linéaire selon la revendication 6, caractérisé en ce que la languette (62) est disposée sur le côté frontal avant (54) d'une section de fermeture (36, 36') et l'évidement (63) correspondant est prévu sur une partie (56), opposée à ce côté frontal (54) dans la direction de déplacement (46), de l'autre section de fermeture.

7. Dispositif d'entraînement linéaire selon l'une des revendications 1 à 6, caractérisé en ce que les parties (53) se chevauchant des sections de fermeture (36, 36') ont la forme de baguettes.

8. Dispositif d'entraînement linéaire selon l'une des revendications 1 à 7, caractérisé en ce que pour la fixation réciproque des éléments de tendeur (28, 28') dans la position de fermeture, il est prévu une liaison vissée ou à goupille (66), agissant entre les sections de fermeture (36, 36'), avec au moins un organe transversal (67), coopérant avec les deux parties (53) se chevauchant.

9. Dispositif d'entraînement linéaire selon l'une des revendications 1 à 8, caractérisé en ce que pour la fixation réciproque des éléments de tendeur (28, 28') dans la position de fermeture, il est prévu une liaison collée ou soudée, par exemple une liaison soudée aux ultrasons agissant entre les sections de fermeture (36, 36').

10. Dispositif d'entraînement linéaire selon l'une des revendications 1 à 9, caractérisé en ce que les sections de fermeture (36, 36') assemblées forment conjointement la section d'accouplement (17) de l'organe de sortie (16), pouvant être accouplée avec une charge à transporter.

11. Dispositif d'entraînement linéaire selon l'une des revendications 1 à 10, caractérisé en ce que chaque section de guidage (33) est pourvue d'un piston de guidage (34), se déplaçant dans une section correspondante (24), élargie, de l'évidement longitudinal (23), piston sur lequel est fixée l'extrémité (15, 15') correspondante du moyen de traction, par l'intermédiaire du dispositif de liaison (32).

12. Dispositif d'entraînement linéaire selon la revendication 11, caractérisé en ce que chaque section de guidage (33) est pourvue d'une nervure de guidage (35), qui traverse une section (25) plus étroite, du genre fente, de l'évidement longitudinal (23), se raccordant radialement à la section (24) élargie de l'évidement longitudinal (23), et qui relie le piston de guidage (34) à la section de fermeture (36, 36') correspondante.

13. Dispositif d'entraînement linéaire selon la revendication 11 ou 12, caractérisé en ce que les pistons de guidage (34) des deux éléments de tendeur (28, 28') sont disposés axialement alignés l'un derrière l'autre, sans chevauchement réciproque.

14. Dispositif d'entraînement linéaire selon l'une des revendications 11 à 13, caractérisé en ce que la section de fermeture (36, 36') de chaque élément de tendeur (28, 28') dépasse sur le côté avant du piston de guidage (34) correspondant.

15. Dispositif d'entraînement linéaire selon l'une des revendications 1 à 14, caractérisé en ce que l'organe de sortie est traversé dans la direction longitudinale (12) par un ajour (27), qui de son côté peut être traversé par une bande de couverture (26), recouvrant l'évidement longitudinal (23), et qui est partagé longitudinalement, sur toute sa longueur, par la zone de séparation (52) des deux éléments de tendeur (28, 28'), de façon que l'ajour soit accessible sur son côté longitudinal, à l'état séparé des éléments de tendeur (28, 28').

16. Dispositif d'entraînement linéaire selon l'une des revendications 1 à 15, caractérisé en ce que les dispositifs de liaison (32) sont formés par des découpes (37), à denture intérieure, logeant les extrémités (15, 15') du moyen de traction.

17. Dispositif d'entraînement linéaire selon l'une des revendications 1 à 16, caractérisé en ce que les deux éléments de tendeur (28, 28') sont de conformation identique.

18. Dispositif d'entraînement linéaire selon l'une des revendications 1 à 17, caractérisé en ce que le dispositif d'entraînement linéaire (1) est actionné par un moteur électrique, l'un au moins des éléments de renvoi (4) étant conformé en roue entraînée en rotation par un moteur.

19. Dispositif d'entraînement linéaire selon l'une des revendications 1 à 18, caractérisé en ce que les deux éléments de tendeur (28, 28') sont réalisés chacun en tant que composants d'un seul tenant, en particulier en matière plastique.
